# EUROPEAN PATENT APPLICATION

(11) **EP 1 046 341 A1**
(43) Date of publication of application: **25.10.2000**
(21) Application number: 00108149.6
(22) Date of filing: 13.04.2000
(51) Int. Cl.: A23D 9/007, A23L 1/30

(54) **Food composition with a high polyunsaturated fatty acid content, its preparations and use in a proper alimentary diet**

(30) Priority: 19.04.1999 IT MI990809
(71) Applicant: GE.FIN. S.A. Società Finanziaria Fiduciaria, 47891 DOGANA, (Repubblica di San Marino) (SM)
(72) Inventor: Littera, Renato, 44100 Ferrara (IT)
(74) Representative: Savi, Alberto

(57) **Abstract**

This invention describes a food composition based on rice oil blended with other vegetable oils with a rich polyunsaturated fatty acid content, in variable ratios and enriched with the vitamins E and B6, as well as its preparation and use in a proper alimentary diet.

## Description

This invention refers to a food composition containing rice oil, naturally rich in or enriched with γ-orizanol and blended with other vegetable oils with a high polyunsaturated fatty acid content, as well as to a method of preparing said composition and using it in the context of a proper alimentary diet.

Modern dietary science has now evidenced the importance of a proper alimentary diet in preventing various pathologies. It is in particular known that the quantity and quality of the fats in the diet play a crucial role in the concentration of lipids in the plasma.

As a matter of fact hyperlipemia, hypertension, smoking and obesity are all factors predisposing toward cardiovascular diseases, and the nutritionists have for this reason suggested using appropriate vegetable and animal oils to improve the plasmatic lipid content.

Fish oils have long been used, which are naturally rich in anti-oxidizing and anti-radical substances capable of improving the plasmatic lipid content. These oils are mostly supplied in capsules and can thus supply the daily amount of long chain polyunsaturated fatty acid of the omega 3 series.

However, they suffer from the drawback of possessing a less than pleasant odor and taste, and are thus scarcely acceptable and hard to digest even in small quantities. Moreover, their high costs restricts their general application in diets for daily usage.

It is also known that the vegetable oils, for instance borrage or enothera, are capable of supplying the proper amount of gamma-linoleic acid, but are poorly balanced in regard to their composition of other fatty acids.

It has recently been discovered that rice oil exerts an effective therapeutic action, by controlling both the cholesterol and triglyceride levels in the plasma. However, this oil has not particularly agreeable organoleptic properties; moreover, it is commercialized (under the trademark ESTEROL®) for the curative treatment of the LDL/HDL lipid imbalance and the reduction of the apolipoprotein B levels, thus preventing the risk of forming atherosclerotic plaques. The cost of rice oil is at any rate high compared to that of other vegetable oils, which further limits its use for daily nutritional purposes.

On the other hand, all the above oils proved to be poorly balanced in their fatty acid content and can therefore, based on the dietary oil guideline issued by the Italian Ministry of Health, not be sold to the public in the usual public chain of distribution, such as groceries, food markets etc.

It has now surprisingly been found a food composition constituted by a blend of appropriate vegetable oils including rice oil, enriched with the vitamins E and B6. This composition has a guaranteed high polyunsaturated fatty acid content, useful for a proper alimentary diet; the daily usage of this composition in diet is not restricted by a prohibitive cost level, its organoleptic properties closely resemble those of the vegetable oils commonly used for nutritional purposes, and its fatty acid content is in line with the guidelines issued by the Italian Ministry of Health as regards dietary oils.

The object of this invention is therefore a food composition containing rice oil and other vegetable oils rich in other blended polyunsaturated fatty acids, further enriched by the vitamins E and B6. In said food composition, the rice oil employed is naturally rich in for eventually enriched with γ-orizanol by known techniques and it is present in a weight percentage of about 5-30%; it is blended with other vegetable oils present in a weight percentage of about 70-95%. The vitamins added to the blend are in a quantity of about 50-60 mg of vitamin E and about 2-3 mg of vitamin B6.

The vegetable oils chosen for the food composition of this invention must all contain high levels of polyunsaturated fatty acids, and are for this reason chosen from the group including fennel-flower oil (black coriander), macerated garlic oil, refined peanut oil, refined avocado oil, babassu oil, borrage oil, calendula oil, carrot oil, refined sofflower oil, refined cocoa oil, hydrogenated cocoa oil, rape oil, refined cotton oil, refined rice gem oil, refined cereal sprout oil, refined wheat sprout oil, refined sunflower oil, jojoba oil, laurel oil, refined flax oil, refined macadam oil, refine corn oil, refined sweet almond oil, refined maracuja oil, refined hazelnut oil, refined apricot kernel oil, refined cherry kernel oil, refined peach kernel oil, refined walnut oil, refined oenothera oil, extra-virgin olive oil, refined olive oil, refined palm oil, refined poppy oil, black currant oil, castor oil, mosqueta rose oil, refined sesame oil, refined soybean oil, refined grape-stone oil, pumpkin oil.

In this group the preferred oils are refined wheat sprout oil, refined oenothera oil, extra-virgin olive oil, refined olive oil and refined soybean oil.

The even more preferred oils for the food composition of this invention are refined corn oil and refined grape-stone oil.

Another object of this invention is constituted by the preparation process of this food composition, which is produced by blending the rice oil and the other chosen vegetable oils in a stainless steel container at a temperature in the range of 20°-28°C, in a sterilized air ambiance. The blending is continued for 12-20', depending on the oil types.

Once the oils have been blended, they are allowed to rest for about an hour, so as to obtain a clear homogeneous blend. After adding the vitamins E and B6, the composition is blended for another 5'.

At the end of the blending phase, the composition is allowed to rest for 30', and subsequently used for bottling or storage in hermetically sealed steel containers.

Another object of this invention is constituted by the use of said food composition to ensure a high guaranteed polyunsaturated fatty acid content in the context of an alimentary diet.

At the lipid level, the action of the food composition as an object of this invention on persons affected by a high cholesterol and/or triglyceride levels can be evaluated by experimental tests known in the scientific literature.

A number of examples of preparing the food composition as an object of this invention will now been presented: said examples are disclosed for the purposes of better illustrating the invention, without in any way limiting it.

### EXAMPLE 1

A composition prepared to contain 5% by weight of rice oil enriched by γ-orizanol and 95% by weight of soya oil, is mixed at 20°C in a 2,000-lt. stainless steel container at 20°C for 12'. The blend is allowed to rest for one hour and then treated with 52 mg of Vitamin E and 2 mg of Vitamin B6. After blending for a period of 5', the composition is allowed to rest for 30' before use.

### EXAMPLE 2

A food composition is prepared as in Example 1, but using 5% of rice oil enriched by γ-orizanol, 95% of soya oil, 50 mg of Vitamin E and 2 mg of Vitamin B6.

### EXAMPLE 3

A food composition is prepared working is as in Example 1, but using only 30% by weight of rice oil enriched by γ-orizanol, 70% by weight of soya oil, 60 mg of Vitamin E and 2 mg of Vitamin B6.

## Claims

1. A food composition characterized in that it contains about 5-30% of rice oil blended with about 70-95% by weight of other vegetable oils selected from the group formed by fennel-flower oil (black coriander), macerated garlic oil, refined peanut oil, refined avocado oil, babassu oil, borrage oil, calendula oil, carrot oil, refined safflower oil, refined cocoa oil, hydrogenated cocoa oil, rape oil, refined cotton oil, refined rice gem oil, refined cereal sprout oil, refined wheat sprout oil, refined sunflower oil, jojoba oil, laurel oil, refined flax oil, refined macadam oil, refine corn oil, refined sweet almond oil, refined maracuja oil, refined hazelnut oil, refined apricot kernel oil, refined cherry kernel oil, refined peach kernel oil, refined walnut oil, refined oenothera oil, extra-virgin olive oil, refined olive oil, refined palm oil, refined poppy oil, black currant oil, castor oil, mosqueta rose oil, refined sesame oil, refined soybean oil, refined grape-stone oil, pumpkin oil,
and treated with a quantity of about 50-60 mg of vitamin E and a quantity of about 2-3 mg of vitamin 66.

2. A composition according to claim 1, characterized in that the rice oil is naturally rich in or eventually enriched with γ-orizanol.

3. A composition according to claims 1 and 2, characterized in that the vegetable oils are selected from refined wheat sprout oil, refined oenothera oil, extra virgin olive oil, refined olive oil and refined soybean oil.

4. A composition according to claims 1 and 2, characterized in that the vegetable oil is refined corn oil.

5. A composition according to claims 1 and 2, characterized in that the vegetable oil is refined grape-stone oil.

6. A process for preparing a food composition according to claim 1, characterized in that the rice oil and the other chosen vegetable oils are blended in a stainless steel container at a temperature of 20-28°C in a sterilized air ambiance for a period of 12-20', depending on the oil types, the blend is then allowed to rest for about one hour and treated with Vitamins E and B6, blended for another 5' and allowed to rest for about 30'.

7. Use of a food composition according to claims 1-5, capable of allowing a high and guaranteed content of polyunsaturated fatty acids in the alimentary diet.
